(19) Europäisches Patentamt / European Patent Office / Office européen des brevets

(11) **EP 2 396 285 B1**

(12) **FASCICULE DE BREVET EUROPEEN**

(45) Date de publication et mention
de la délivrance du brevet:
**01.06.2016 Bulletin 2016/22**

(21) Numéro de dépôt: **10708299.2**

(22) Date de dépôt: **08.02.2010**

(51) Int Cl.:
**C03B 18/14** *(2006.01)*

(86) Numéro de dépôt international:
**PCT/FR2010/050199**

(87) Numéro de publication internationale:
**WO 2010/092284 (19.08.2010 Gazette 2010/33)**

(54) **FABRICATION DE VERRE PLAT TEXTURE AU FLOTTAGE**

HERSTELLUNG VON TEXTURIERTEM FLACHGLAS DURCH FLOATING

PRODUCING TEXTURED FLAT GLASS BY FLOATING

(84) Etats contractants désignés:
**AT BE BG CH CY CZ DE DK EE ES FI FR GB GR
HR HU IE IS IT LI LT LU LV MC MK MT NL NO PL
PT RO SE SI SK SM TR**

(30) Priorité: **11.02.2009 FR 0950856**

(43) Date de publication de la demande:
**21.12.2011 Bulletin 2011/51**

(73) Titulaire: **Saint-Gobain Glass France
92400 Courbevoie (FR)**

(72) Inventeurs:
• **LOPEPE, Frédéric
F-93110 Rosny sous Bois (FR)**
• **MARCOS FERNÁNDEZ, María Concepción
E-33405 Salinas (Asturias) (ES)**

(74) Mandataire: **Colombier, Christian
Saint-Gobain Recherche
39, quai Lucien Lefranc
93300 Aubervilliers (FR)**

(56) Documents cités:
WO-A-2008/144655    WO-A1-03/046617
FR-A1- 2 893 610    US-A- 3 206 292
US-A- 3 226 652    US-A- 3 524 739
US-A- 3 589 886    US-A- 3 672 859

• **James Barton ET AL: "La mise en forme du verre"
In: "Le verre Science et technologie", 1 January
2005 (2005-01-01), EDPSciences, XP055094094,
ISBN: 978-2-86-883789-9 pages 246-253,**

**Description**

L'invention concerne un procédé pour réaliser une texture en relief en surface d'un verre plat au cours même du processus de formage en verre plat.

De nos jours, le verre plat non texture (lisse en ses deux faces) est fabriqué par laminage ou flottage sur un bain de métal comme l'étain. Il existe un besoin en verre plat présentant à sa surface une texture, notamment pour application photovoltaïque. Dans certains cas, la texture permet de mieux capturer la lumière pour la transmettre aux cellules photovoltaïques. Ce type de texture a notamment été décrit dans les WO03/046617, WO2005/111670, WO2006/134301, WO2006/134300, WO2007/015019. La capture efficace de la lumière repose sur une géométrie précise des textures imprimées en surface du verre. Dans d'autres cas, une texture ondulée peu profonde (souvent qualifiée de « granité » ou « rugueux ») confère une propriété anti-éblouissement (anti-glare en anglais) sans améliorer la quantité de lumière capturée. Ce type de texturation peu profonde est également utile en application photovoltaïque.

Le WO2008/144655 enseigne la texturation d'un verre flotté par un rouleau de texturation. Après l'application du rouleau imprimeur, le ruban de verre est refroidi par un système de refroidissement local tel qu'une vaporisation d'eau ou de gaz cryogénique non réactif.

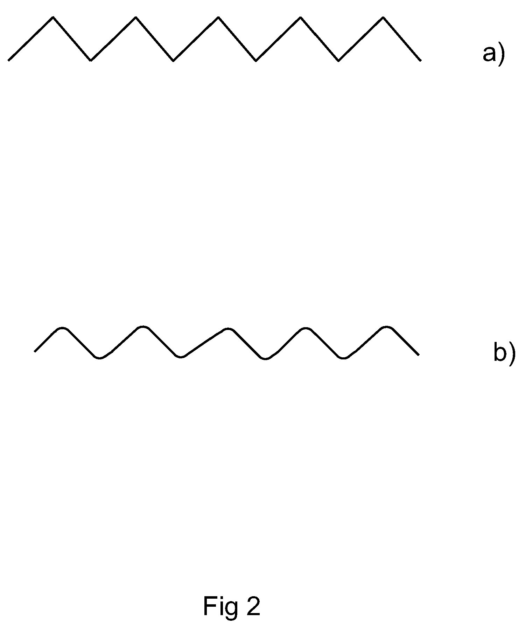

Le US4746347 enseigne un dispositif de flottage de verre intégrant un rouleau de texturation pour imprimer la face supérieure du verre. Ce rouleau est refroidi par de l'eau le parcourant à l'intérieur. Les inventeurs ont testé ce système et ont trouvé qu'il est effectivement possible de texturer la surface d'un ruban de verre plat. Si l'impression de figures à but plus ou moins esthétique est possible par ce système, il s'est cependant avéré impossible d'imprimer correctement certaines textures géométriques précises comme des pyramides ou autres polygones à flancs plans et angles vifs. En effet, en conséquence de l'état ramolli du verre et des tensions de surface, il s'est avéré impossible de conserver les angles vifs imprimés par le rouleau, lesdits angles vifs s'arrondissant inévitablement au cours du cheminement du ruban de verre entre le rouleau et la séparation du ruban du bain de flottage métallique, par cause de fluage. La figure 2 illustre ce phénomène. Egalement, des textures peu profondes disparaissent, le fluage du verre en surface aplanissant le relief. Cette difficulté à réaliser une texture au cours du flottage explique pourquoi aujourd'hui le verre plat texture est systématiquement fait par laminage.

Sans que la présente explication ne puisse procurer une limitation à la présente demande, il semble que la forte transmission énergétique du verre conduit à une égalisation rapide de la température des deux faces du ruban, de sorte que la chaleur du bain de métal se transmet très rapidement à travers le verre à la face supérieure imprimée. C'est pourquoi malgré le refroidissement exercé par le rouleau d'impression, la face supérieure imprimée se réchauffe rapidement et son fluage conduit à la déformation des motifs. De tels verres à forte transmission énergétique sont utilisés pour les applications photovoltaïques dans lesquelles une plaque de verre reçoit les rayons solaires et les transmet à des cellules photovoltaïques.

Les inventeurs ont maintenant trouvé qu'il était possible de conserver de façon satisfaisante les formes imprimées, même si elles comportent des angles vifs et des surfaces planes comme dans les pyramides et même si elles sont de faible profondeur comme dans une surface rugueuse (souvent dite « granité »), grâce à l'utilisation de moyens de refroidissement extérieurs au rouleau et s'appliquant au ruban de verre au moins juste après le rouleau. Ce refroidissement supplémentaire peut être du type convectif, conductif ou radiatif. Il s'exerce par l'intermédiaire de la face inférieure du verre et peut s'exercer par l'intermédiaire de la face supérieure du verre. Ces moyens de refroidissement peuvent soit être directement dirigés vers le verre, ou concerner plus généralement l'enceinte de flottage en aval du rouleau imprimeur, ce qui joue indirectement sur la température du ruban imprimé en aval du rouleau imprimeur. Le refroidissement exercé est tel qu'il réduit la remontée en température de la surface du verre en aval du rouleau imprimeur.

Dans la demande, les termes amont et aval se réfèrent au sens d'écoulement du verre dans l'enceinte, le verre étant coulé sur le métal tout en amont de l'enceinte alors que le ruban de verre plat est extrait tout en aval de l'enceinte.

Le rouleau imprimeur est un cylindre métallique comportant à sa surface le négatif (ou réplique) de la texture à appliquer au verre et l'axe dudit cylindre est parallèle au ruban de verre et perpendiculaire à sa direction de défilement (l'axe du cylindre est transversal par rapport à l'axe longitudinal de l'enceinte correspondant à la direction de transport du ruban). Le rouleau imprimeur est parcouru par un fluide de refroidissement, généralement de l'eau.

Le refroidissement exercé est tel qu'une différence de température d'au moins 150°C et de préférence d'au moins 200°C est observée en surface du verre (température de peau du verre) entre un point situé 50 cm avant contact avec le rouleau et un point situé 50 cm après contact avec le rouleau. Ainsi, l'invention concerne en premier lieu un procédé de fabrication d'un verre plan comprenant une texture en surface par flottage sur un métal fondu dans une enceinte de flottage comprenant un rouleau imprimeur métallique refroidi par de l'eau le parcourant, ledit rouleau appliquant une texture à la surface supérieure du verre, dans lequel le ruban de verre est refroidi en aval du rouleau imprimeur par un bain de métal plus froid en aval qu'en amont du rouleau imprimeur, de sorte qu'une différence de température d'au moins 150°C et de préférence d'au moins 200°C est obtenue en surface du verre entre un point situé 50 cm avant contact avec le rouleau et un point situé 50 cm après contact avec le rouleau, le refroidissement du ruban de verre en aval du rouleau imprimeur étant exercé par une barrière immergée dans le bain de métal fondu et placée sensiblement en-dessous du rouleau imprimeur de façon à séparer un bain de métal fondu plus chaud en amont d'un bain de métal fondu moins chaud en aval. Le ruban de verre peut être refroidi en aval du rouleau imprimeur par une atmosphère plus froide en aval qu'en amont du rouleau imprimeur ou un absorbeur de chaleur placé au-dessous (dans le bain de métal) ou au-dessus (dans l'atmosphère de l'enceinte) du ruban de verre, en aval du rouleau imprimeur.

L'absorbeur de chaleur peut être un écran placé au-dessus du verre sans contact avec lui et absorbant les radiations émanant du verre, ou peut être un rouleau refroidi en contact avec lui.

Pour exercer ce refroidissement, on peut par exemple placer un refroidisseur aérien métallique derrière le rouleau de marquage. Ce refroidisseur peut avoir la forme d'un tuyau ou une autre forme. Il s'agit donc d'un tube de forme quelconque parcouru par un fluide de refroidissement. Le refroidisseur aérien est parcouru par un fluide refroidisseur comme l'eau ou un gaz. Le refroidisseur aérien est placé au-dessus du ruban de verre et en travers (transversalement) de la direction de défilement du ruban de manière à descendre brusquement la température du verre après son marquage. Ce refroidisseur aérien est généralement placé dans l'atmosphère de l'enceinte entre le plan vertical passant par la ligne de contact du rouleau imprimeur avec le verre et le plan vertical transversal passant 2 mètres en aval de ladite ligne. En hauteur, il est généralement placé entre la surface du verre et le plan horizontal passant 300 mm au-dessus du sommet du rouleau imprimeur.

Pour exercer ce refroidissement, on peut également souffler un gaz inerte ou éventuellement réducteur de température plus basse que le verre vers la surface du verre. Ce peut être de l'azote. Le soufflage du gaz se fait au dessus de la feuille de verre au moyen d'une canalisation (tuyaux ou autre) percée ou rainurée. Le gaz, après impact avec la surface du verre, se mélange avec l'atmosphère du bain de flottage (bain float) ou est aspiré pour être évacué. Ce soufflage est généralement exercé entre le plan vertical passant par la ligne de contact du rouleau imprimeur avec le verre et le plan vertical transversal passant 2 mètres en aval de ladite ligne. Le gaz est soufflé vers le ruban de verre en aval du rouleau imprimeur, la température dudit gaz étant plus basse que celle du verre à l'endroit du soufflage.

Pour exercer ce refroidissement, on peut également placer un écran au-dessus du ruban de verre en aval du rouleau d'impression, ledit écran remplissant une double fonction, d'une part l'absorption de la radiation de la feuille de verre et d'autre part, le rôle d'écran pour les radiations émises par l'ensemble de l'enceinte de flottage, et ce, de façon à limiter le réchauffement du verre postérieurement à l'impression. De préférence, cet écran est noir ou sombre, car la propriété de corps noir lui permet d'être mieux absorbant des radiations. Cet écran est généralement placé dans l'atmosphère de l'enceinte entre le plan vertical passant par la ligne de contact du rouleau imprimeur avec le verre et le plan vertical transversal passant 2 mètres en aval de ladite ligne. Ainsi, environ 2 m en aval de l'axe du rouleau d'impression, le ruban de verre est plus froid quand cet écran est en place, comparé au procédé identique sans ledit écran.

Pour exercer ce refroidissement, on peut également utiliser un rouleau supplémentaire refroidi non texturé. Ce rouleau supplémentaire est placé en aval du rouleau marqueur (c'est-à-dire imprimeur) au-dessus du ruban de verre. Il touche la surface du verre pour la refroidir sans créer de gravure additionnelle. Ce rouleau supplémentaire est généralement placé dans l'atmosphère de l'enceinte entre le plan vertical passant par la ligne de contact du rouleau imprimeur avec le verre et le plan vertical transversal passant 2 mètres en aval de ladite ligne.

Pour exercer ce refroidissement, on peut également utiliser un rouleau supplémentaire refroidi et texturé. Ce rouleau supplémentaire est placé en aval du rouleau imprimeur au-dessus du ruban de verre. Il touche la surface du verre pour la refroidir et crée une gravure additionnel. Ce rouleau supplémentaire est généralement placé dans l'atmosphère de l'enceinte entre le plan vertical passant par la ligne de contact du rouleau imprimeur avec le verre et le plan vertical transversal passant 2 mètres en aval de ladite ligne.

Un rouleau supplémentaire refroidi texture ou non texturé est de préférence placé en aval du rouleau imprimeur. Ce rouleau est en contact avec le verre et sert surtout à limiter la remontée du verre en température. Il peut ne pas être texturé auquel cas il est lisse. Il peut être texturé afin de créer une gravure additionnelle qui pourrait renforcer un effet anti-éblouissement déjà créé par le rouleau imprimeur. Tout rouleau refroidi en contact avec le verre en aval du rouleau imprimeur est de préférence utilisé dans le cadre de la réalisation d'une texture peu profonde comme celle conférant une propriété anti-éblouissement (anti-glare en anglais), notamment de rugosité Ra comprise entre 0,5 et 10 $\mu$m.

L'eau traversant un rouleau refroidi dans le cadre de la présente invention (rouleau imprimeur ou rouleau refroidisseur en aval du rouleau imprimeur) est avantageusement de l'eau courante. Sa température est généralement comprise entre 4 et 20°C.

On peut aussi équiper l'enceinte de flottage de moyens de contrôle de sa thermique. Dans ce cadre, on peut notamment compartimenter l'atmosphère de l'enceinte, compartimenter le bain de métal fondu (étain), refroidir ledit bain.

Un compartimentage de l'atmosphère de l'enceinte peut être réalisé grâce à une cloison (écran, mur, rideau) pendue de la voûte de l'enceinte de flottage. On peut aussi assurer le maintien de cette cloison par une paroi latérale, notamment en passant ladite cloison à travers un orifice dans une paroi latérale. Ce compartimentage, placé sensiblement au niveau du rouleau d'impression, permet d'avoir une atmosphère plus chaude en amont du rouleau imprimeur et plus froide en aval. Ces cloisons peuvent être multiples, c'est-à-dire disposées parallèlement l'une après l'autre, pour obtenir un effet thermique accumulé.

Un compartimentage du bain de métal fondu est obtenu par au moins une barrière immergée dans le bain de métal fondu. L'objectif est d'avoir un contrôle de la température de l'étain en dessous de la feuille de verre de façon à avoir une zone plus chaude en amont du rouleau imprimeur et une zone plus froide en aval du rouleau imprimeur. La cloison est placée sensiblement en-dessous du rouleau imprimeur de façon à séparer un bain de métal fondu plus chaud en aval d'un bain de métal fondu moins chaud en aval. La cloison (ou barrière) coupe les courants d'étain entre la zone chaude et la zone froide. Cela permet d'avoir l'étain plus chaud en amont du rouleau de marquage et plus froid en aval. D'autres systèmes comme des drapeaux (FLAG en anglais) ou autres peuvent aussi permettre le contrôle de la thermique de l'étain.

On peut aussi refroidir le bain de métal fondu en aval du rouleau imprimeur à l'aide d'un tube refroidisseur plongé dans ledit bain, ledit tube étant en forme de tuyau, écran ou autres, parcouru par un fluide de refroidissement. Le fluide de refroidissement peut être de l'eau ou un gaz. Le refroidisseur est immergé dans le métal fondu de manière à descendre brusquement la température de celui-ci après le marquage et à la contrôler jusqu'à la sortie du ruban de verre du bain. Avantageusement, un refroidissement du bain de métal fondu est combiné avec un compartimentage du bain de métal fondu. Le tube refroidisseur est généralement placé dans le bain de métal fondu entre le plan vertical passant par la ligne de contact du rouleau imprimeur avec le verre et le plan vertical passant 2 mètres en aval de ladite ligne.

Le verre est coulé en amont sur le métal fondu à environ à une température comprise entre 1000 et 1250°C. Le verre est sorti en aval de l'enceinte de flottage à une température comprise entre 570 et 630°C. Le rouleau imprimeur est placé à un endroit dans l'enceinte où le verre arrive sensiblement à une température comprise entre 750 et 980°C et de préférence entre 810 et 870°C, cette température étant mesurée 50 cm en amont de la ligne transversale de contact du rouleau avec le verre. Le verre arrive sous le rouleau à une température suffisamment élevée pour la réalisation de l'impression par le rouleau. L'abaissement de température est brusque de sorte que le profil de température du verre (température en fonction de la position longitudinale dans l'enceinte) observe un point d'inflexion aux alentours du rouleau de marquage.

Le ruban de verre a une épaisseur allant généralement de 0,8 à 10 mm et, particulièrement en ce qui concerne les applications photovoltaïques, 1 à 6 mm. Pour l'application photovoltaïque, le verre est de préférence extra-clair, c'est-à-dire présentant une transmission énergétique supérieure à 85% et même supérieur à 89% pour une épaisseur de verre de 3,2 mm (voir en particulier norme ISO9050 air mass 1.5). Cela ne signifie pas que le verre a nécessairement une épaisseur de 3,2 mm, cela signifie que la transmission énergétique est mesurée avec cette épaisseur. Le verre commercialisé par Saint-Gobain Glass France sous la marque Diamant est particulièrement adapté.

La vitesse linéaire du rouleau au contact du verre est égale à la vitesse du verre en cette ligne de contact.

Le rouleau imprimeur est de préférence situé dans l'enceinte à un endroit ou le ruban a son épaisseur et sa largeur définitive. Dans ce cas, le verre n'est plus étiré en aval du rouleau. Le rouleau a alors à sa surface la réplique exacte du motif finalement souhaité. Il est cependant aussi possible de prévoir un étirement après impression de la texture, mais dans ce cas le rouleau a à sa surface une texture un peu différente que l'on a extrapolée compte tenu de la texture finale souhaitée et de l'étirement procuré au ruban de verre en aval du rouleau.

Après sortie de l'enceinte de flottage, le ruban de verre traverse une étenderie pour contrôler sa température de refroidissement, puis le ruban est découpé en panneaux. Dans le cas d'une texture profonde (pyramides macroscopiques), on préfère utiliser la technique de découpe au laser. Il est possible de procéder à la découpe par des moyens classiques tels qu'une molette ou un diamant mais dans ce cas, il convient de le faire par la face du dessous, non-texturée. Dans le cas d'une texture peu profonde (notamment aspect granité), la texture ne gène pas et l'on peut utiliser les moyens de découpe habituels, ce qui inclut la découpe par une molette ou un diamant par la face du dessus, texturée.

Le procédé selon l'invention permet la fabrication d'une feuille de verre comprenant deux faces principales dont une face principale comprend une texture en relief et dont l'autre face principale est enrichie en étain.

La vitre à surface granitée est généralement telle que pour n'importe quel profil (coupe selon un plan orthogonal à la surface), sa rugosité Ra soit comprise entre 0,5 et 10 μm. Rappelons que si z(x) est le profil correspondant à l'écart à la moyenne de chaque point de mesure d'abscisse x, la rugosité Ra sur une longueur I est défini comme suit :

$$Ra \quad = \quad \frac{1}{\ell} \int_0^\ell \left| z\left( x \right) \right| dx$$

Pour une surface granité et une rugosité Ra choisi entre 0,5 et 10 μm. On choisi de préférence le paramètre $R_{Sm}$ entre 100 μm et 3 mm, pour n'importe quel profil (coupe selon un plan orthogonal à la surface). On rappelle que $R_{Sm}$ (période moyenne ou pas moyen) est défini comme suit :

EP 2 396 285 B1

$$R_{sm} = \frac{1}{n} \sum_{i=1}^{i=n} Si = \frac{S_1 + S_2 + .... + S_n}{n}$$

où Si est la distance entre deux passages par zéro (ligne médiane) et montants, n+1 étant le nombre de passage par zéro en montant dans le profil considéré. Ce paramètre $R_{Sm}$ est représentatif de la distance entre pics c'est-à-dire du pas de la texture à l'horizontale. Les valeurs de Ra et de $R_{Sm}$ sont données après utilisation de filtres gaussiens avec coupures (ou longueur de base, cut-off en anglais) à $25\mu m$ et 8 mm (suppression des périodes supérieures à 8 mm et inférieures à 25 $\mu$m). Les mesures de Ra et Rsm sont réalisées sur une distance d'au moins 40 mm.

La texture en relief peut aussi être plus profonde et de périodicité plus faible (plus grand motifs) comme c'est le cas des motifs géométriques destinés à piéger la lumière incidente dans le cas de l'application photovoltaïque. Ainsi, ces motifs peuvent avoir des surfaces inclinées par rapport au plan général de la feuille, comme c'est le cas des prismes, cônes ou pyramides à bases polygonales. Ces surfaces inclinées (courbes ou planes) forment de préférence un angle compris entre 35° et 55° avec le plan général de la plaque (c'est le plan de la plaque elle-même). Pour l'application photovoltaïque, on préfère des motifs en relief pouvant s'inscrire dans un cercle de diamètre 100 $\mu$m à 6 mm.

Le rouleau d'impression est généralement placé dans la zone située entre ¼ et ⅜ % de la longueur du ruban de verre dans l'enceinte (entre le point le plus en amont où le verre touche le bain de métal et le point le plus en aval ou le verre est séparé de l'étain).

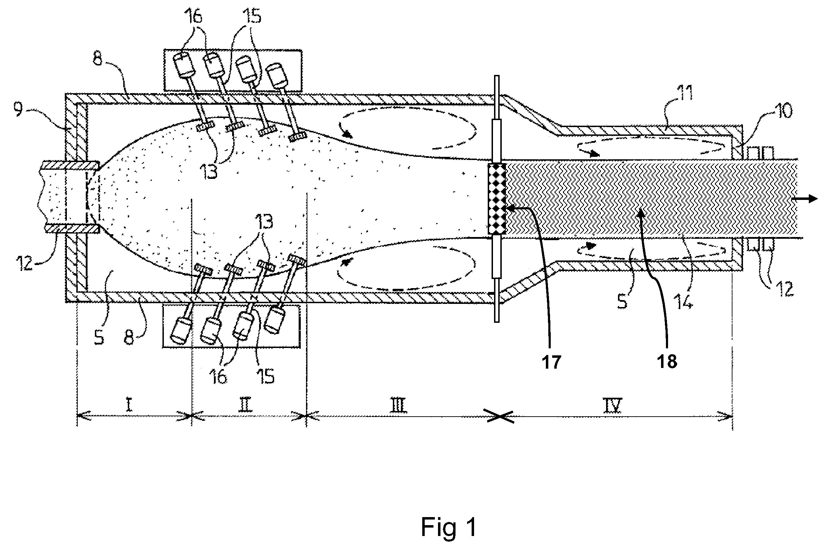

La figure 1 représente une installation de flottage pour la mise en oeuvre du procédé selon l'invention. Elle comprend une cuve munie de parois latérales 8 et de parois d'extrémités 9 et 10, respectivement à l'entrée et à la sortie de la cuve. Cette cuve contient un bain d'étain 5 en fusion. Le verre fondu est déversé sur le bain à son entrée, à partir d'un canal de distribution 12 se finissant par la lèvre de coulée et disposé au-dessus de la paroi d'entrée de la cuve. Le bain comporte plusieurs zones que l'on peut distinguer de la façon suivante :

- une zone I d'étalement du verre à la suite de sa coulée sur le bain de métal fondu, en amont ;
- une zone II dans laquelle le ruban de verre en formation subit des forces longitudinales et dirigées vers l'extérieur sous les actions des rouleaux extracteurs 12 et des rouleaux de bords 13. Dans cette zone, l'étirage du verre commence et celui-ci s'amincit ;
- une zone III où le ruban de verre prend sa forme définitive sous l'action des rouleaux extracteurs 12 ; Les zones II et III forment ensemble la zone d'étirage.
- une zone IV de consolidation où le ruban de verre figé se refroidit progressivement.

Après avoir été déversé sur le bain de métal fondu, le verre s'étale librement au maximum dans la zone I. Il se forme ainsi un ruban 14 qui se déplace vers l'aval sous l'effet de la traction des rouleaux extracteurs 12 extérieurs à la cuve. L'épaisseur désirée est ensuite obtenue par l'action combinée de la traction des rouleaux extracteurs 12 et des rouleaux de bord moletés 13, généralement en acier, légèrement obliques par rapport à la perpendiculaire à la direction d'avance du ruban. Ces rouleaux de bord sont reliés par arbre 15 à des moteurs 16 qui les entraînent généralement à des vitesses différentes selon leur position, et croissantes vers l'aval. Les rouleaux extracteurs 12 extraient le ruban de verre de l'enceinte de flottage. Le rouleau 17 imprime un motif en surface 18 du ruban 14. Ce rouleau est situé dans l'enceinte à un endroit où le ruban a son épaisseur et sa largeur définitive. Le déplacement du ruban de verre sur le bain provoque sous le ruban des courants de métal fondu représentés par des flèches en pointillés.

La figure 2a représente des motifs pyramidaux en coupe (ladite coupe passant par des sommets de pyramides) que l'on cherche à imprimer idéalement par un rouleau ayant à sa surface la réplique exacte de ces motifs et la figure 2b représente ce qui est obtenu si l'on applique l'enseignement du US4746347 (absence de moyens de refroidissement en aval du rouleau imprimeur). Les angles vifs des pyramides se sont arrondis sous l'effet des tensions de surface.

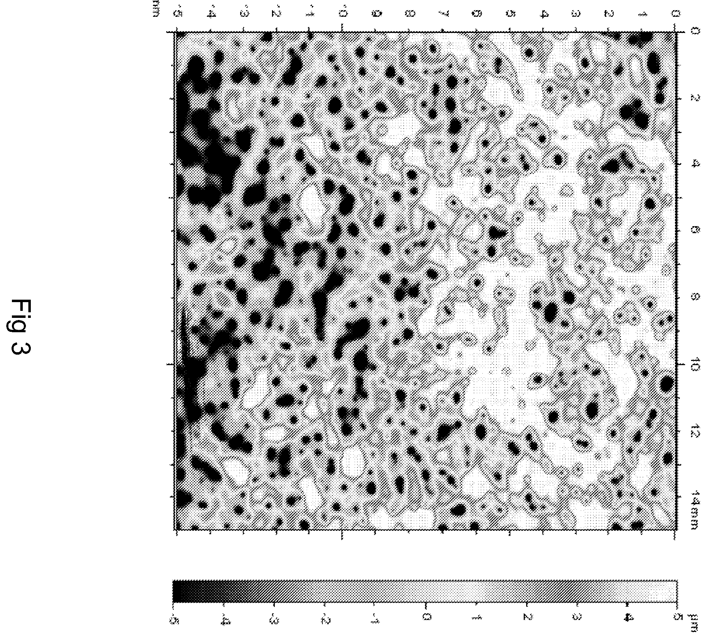

La figure 3 représente une texture de surface dite « granité » de faible profondeur. Cette texture confère une propriété anti-éblouissante à la surface. Du fait de sa faible profondeur, cette texture a tendance à s'estomper et même disparaître au cours du cheminement du ruban en aval du rouleau d'impression.

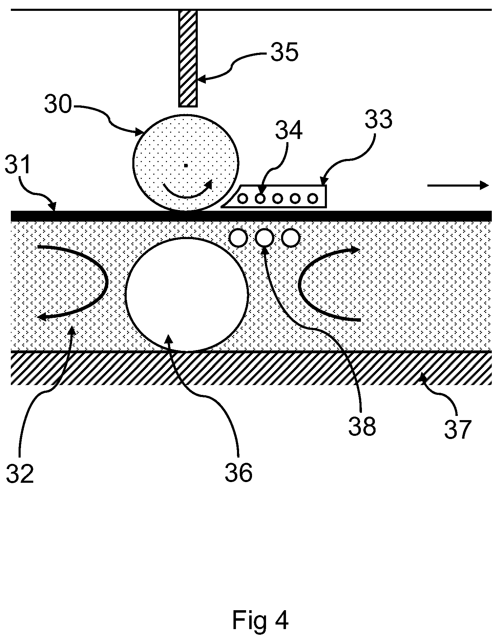

La figure 4 représente la zone de l'enceinte de flottage comprenant le rouleau d'impression 30, vu en coupe de côté, différents moyens de refroidissement selon l'invention étant combinés. Les moyens de refroidissement ont été combinés au sein de la même figure pour ne pas multiplier inutilement le nombre de figures, mais l'invention concerne aussi l'usage d'une barrière immergée seule associée au rouleau de gravure. Le rouleau 30 imprime un motif en relief à la surface du ruban de verre 31 flottant sur un bain d'étain fondu 32. Juste derrière le rouleau se trouve un écran métallique 33 refroidi par de l'eau de refroidissement parcourant des alvéoles 34. Cet écran aérien est à une distance de la surface de verre entre 5 et 30 cm. Au dessus du rouleau se trouve un écran vertical 35 en céramique réfractaire (ou autre matériau adapté) fixé à la voûte et compartimentant l'enceinte de flottage de façon à ce que l'atmosphère en aval dudit écran et dudit rouleau puisse être gardée plus froide qu'en amont. Sous le rouleau, immergé dans le bain d'étain se trouve une barrière 36 compartimentant le bain d'étain de sorte que celui-ci puisse être plus chaud en amont qu'en aval. La barrière est ici cylindrique, ce qui permet de la déplacer sur le fond et la positionner facilement. Cette barrière est en graphite avec un coeur en tungstène pour l'alourdir (tout autre matériau lourd compatible avec l'étain conviendrait). Un mur immergé parallélépipédique pourrait aussi convenir. Cette barrière 36 est posée sur la sole 37 de l'enceinte de flottage. Dans la partie du bain d'étain en aval se trouvent juste sous le ruban de verre en défilement des tuyaux 38 en matériaux céramiques (ou autre matériau compatible avec l'étain) parcourus par de l'eau de refroidissement. On a représenté par des flèches deux courroies de convection dans le bain de métal fondu, l'une en amont de la barrière 36, l'autre en aval de la barrière 36. Ces deux courroies sont le reflet de la séparation des deux parties du bain permettant de les avoir à des températures différentes.

## Revendications

1. Procédé de fabrication d'un verre plat comprenant une texture en surface par flottage d'un ruban dudit verre sur un métal fondu (32) dans une enceinte de flottage, le verre étant coulé sur le métal fondu en amont de l'enceinte, le ruban de verre plat étant extrait en aval de l'enceinte, ladite enceinte comprenant un rouleau imprimeur (30) appliquant une texture à la surface supérieure du verre, **caractérisé en ce que** le rouleau imprimeur (30) est métallique et est refroidi par de l'eau le parcourant et **en ce que** le ruban de verre (31) est refroidi en aval du rouleau imprimeur de sorte qu'une différence de température d'au moins 150°C est obtenue en surface du verre entre un point situé en surface du verre 50 cm avant contact avec le rouleau et un point situé en surface du verre 50 cm après contact avec le rouleau, le refroidissement du ruban de verre en aval du rouleau imprimeur étant exercé par une barrière immergée (36) dans le bain de métal fondu et placée sensiblement en-dessous du rouleau imprimeur de façon à séparer un bain de métal fondu plus chaud en amont d'un bain de métal fondu moins chaud en aval.

2. Procédé selon la revendication précédente, **caractérisé en ce qu'** une différence de température d'au moins 200°C est obtenue en surface du verre entre un point situé en surface du verre 50 cm avant contact avec le rouleau et un point situé en surface du verre 50 cm après contact avec le rouleau (30).

3. Procédé selon l'une des revendications précédentes, **caractérisé en ce que** le refroidissement du ruban de verre en aval du rouleau imprimeur est exercé par une atmosphère plus froide en aval qu'en amont du rouleau imprimeur (30) ou un absorbeur de chaleur placé en aval du rouleau imprimeur.

4. Procédé selon l'une des revendications précédentes, **caractérisé en ce qu'**un tube parcouru par un fluide de refroidissement est placé au-dessus du ruban de verre en aval du rouleau imprimeur.

5. Procédé selon l'une des revendications précédentes, **caractérisé en ce qu'**un gaz est soufflé vers le ruban de verre en aval du rouleau imprimeur, la température dudit gaz étant plus basse que celle du verre à l'endroit du soufflage.

6. Procédé selon l'une des revendications précédentes, **caractérisé en ce qu'**un écran (33) est placé au-dessus du ruban de verre en aval du rouleau imprimeur.

7. Procédé selon l'une des revendications précédentes, **caractérisé en ce qu'**un rouleau supplémentaire refroidi non texturé est placé en aval du rouleau imprimeur au-dessus du ruban de verre et touche la surface du verre pour la refroidir sans créer de gravure additionnelle.

8. Procédé selon l'une des revendications 1 à 6, **caractérisé en ce qu'**un rouleau supplémentaire refroidi texturé est placé en aval du rouleau imprimeur au-dessus du ruban de verre et touche la surface du verre pour la refroidir en créant une gravure additionnelle.

9. Procédé selon l'une des deux revendications précédentes, **caractérisé en ce que** le rouleau supplémentaire est refroidi par de l'eau le parcourant.

10. Procédé selon l'une des revendications précédentes, **caractérisé en ce qu'**une cloison (35) est placée sensiblement au-dessus du rouleau imprimeur de façon à séparer une atmosphère plus chaude en amont d'une atmosphère moins chaude en aval.

11. Procédé selon l'une des revendications précédentes, **caractérisé en ce que** le verre est à une température comprise entre 750 et 980°C, 50 cm en amont de la ligne transversale de contact du rouleau avec le verre.

**12.** Procédé selon la revendication précédente, **caractérisé en ce que** le verre est à une température comprise entre 810 et 870°C, 50 cm en amont de la ligne transversale de contact du rouleau avec le verre.

**13.** Procédé selon l'une des revendications précédentes, **caractérisé en ce que** le verre est de transmission énergétique supérieure à 85% pour une épaisseur de verre de 3,2 mm.

**14.** Procédé selon l'une des revendications précédentes, **caractérisé en ce que** la texture comprend des motifs géométriques comprenant des surfaces inclinées formant un angle compris entre 35° et 55° avec le plan général du ruban.

**15.** Procédé selon l'une des revendications précédentes, **caractérisé en ce que** la texture comprend des motifs du type prismes, cônes ou pyramides à bases polygonales.


**Patentansprüche**

**1.** Verfahren zum Herstellen eines Flachglases mit einer Oberflächentextur durch Floaten eines Bandes des Glases auf einem geschmolzenen Metall (32) in einer Floatkammer, wobei das Glas auf das geschmolzene Metall stromaufwärts der Kammer gegossen wird, wobei das Flachglasband stromabwärts der Kammer entnommen wird, wobei der Raum eine Druckwalze (30) umfasst, die auf die obere Oberfläche des Glases eine Textur aufbringt, **dadurch gekennzeichnet, dass** die Druckwalze (30) metallisch ist und durch sie hindurch strömendes Wasser gekühlt wird, und dass das Glasband (31) stromabwärts der Druckwalze gekühlt wird, so dass ein Temperaturunterschied von mindestens 150 °C an der Oberfläche des Glases zwischen einem Punkt, der sich an der Oberfläche des Glases 50 cm vor dem Kontakt mit der Walze befindet, und einem Punkt, der sich an der Oberfläche des Glases 50 cm nach dem Kontakt mit der Walze befindet, erhalten wird, wobei das Kühlen des Glasbandes stromabwärts der Druckwalze durch eine Barriere (36) erfolgt, die in die Metallschmelze eingetaucht wird und im Wesentlichen unterhalb der Druckwalze platziert wird, um eine heißere Metallschmelze stromaufwärts von einer kühleren Metallschmelze stromabwärts zu trennen.

**2.** Verfahren nach dem vorhergehenden Anspruch, **dadurch gekennzeichnet, dass** ein Temperaturunterschied von mindestens 200 °C an der Oberfläche des Glases zwischen einem Punkt, der sich an der Oberfläche des Glases 50 cm vor dem Kontakt mit der Walze befindet, und einem Punkt, der sich an der Oberfläche des Glases 50 cm nach dem Kontakt mit der Walze (30) befindet, erhalten wird.

**3.** Verfahren nach einem der vorhergehenden Ansprüche, **dadurch gekennzeichnet, dass** das Kühlen des Glasbandes stromabwärts der Druckwalze durch eine Atmosphäre erfolgt, die stromabwärts der Druckwalze (30) kälter ist als stromaufwärts, oder einen Wärmeabsorber, der stromabwärts der Druckwalze platziert wird.

**4.** Verfahren nach einem der vorhergehenden Ansprüche, **dadurch gekennzeichnet, dass** eine durch ein Kühlfluid durchströmte Rohrleitung oberhalb des Glasbandes stromabwärts der Druckwalze platziert wird.

**5.** Verfahren nach einem der vorhergehenden Ansprüche, **dadurch gekennzeichnet, dass** ein Gas zu dem Glasband hin stromabwärts der Druckwalze eingeblasen wird, wobei die Temperatur des Gases niedriger ist als die des Glases an der Stelle des Einblasens.

**6.** Verfahren nach einem der vorhergehenden Ansprüche, **dadurch gekennzeichnet, dass** ein Schirm (33) oberhalb des Glasbandes stromabwärts der Druckwalze platziert wird.

**7.** Verfahren nach einem der vorhergehenden Ansprüche, **dadurch gekennzeichnet, dass** eine weitere gekühlte und nicht texturierte Walze stromabwärts der Druckwalze oberhalb des Glasbandes platziert wird und die Oberfläche des Glases berührt, um sie zu kühlen, ohne eine zusätzliche Prägung zu erzeugen.

**8.** Verfahren nach einem der Ansprüche 1 bis 6, **dadurch gekennzeichnet, dass** eine weitere gekühlte und texturierte Walze stromabwärts der Druckwalze oberhalb des Glasbandes platziert wird und die Oberfläche des Glases berührt, um sie zu kühlen, wodurch eine zusätzliche Prägung erzeugt wird.

**9.** Verfahren nach einem der zwei vorhergehenden Ansprüche, **dadurch gekennzeichnet, dass** die weitere Walze durch sie hindurch strömendes Wasser gekühlt wird.

10. Verfahren nach einem der vorhergehenden Ansprüche, **dadurch gekennzeichnet, dass** eine Trennwand (35) im Wesentlichen oberhalb der Druckwalze platziert wird, um eine heißere Atmosphäre stromaufwärts von einer kühleren Atmosphäre stromabwärts zu trennen.

11. Verfahren nach einem der vorhergehenden Ansprüche, **dadurch gekennzeichnet, dass** das Glas 50 cm stromaufwärts der querverlaufenden Kontaktlinie der Walze mit dem Glas eine Temperatur zwischen 750 und 980 °C hat.

12. Verfahren nach einem der vorhergehenden Ansprüche, **dadurch gekennzeichnet, dass** das Glas 50 cm stromaufwärts der querverlaufenden Kontaktlinie der Walze mit dem Glas eine Temperatur zwischen 810 und 870 °C hat.

13. Verfahren nach einem der vorhergehenden Ansprüche, **dadurch gekennzeichnet, dass** das Glas bei einer Glasdicke von 3,2 mm eine Energieübertragung größer als 85 % hat.

14. Verfahren nach einem der vorhergehenden Ansprüche, **dadurch gekennzeichnet, dass** die Textur geometrische Muster aufweist, die geneigte Oberflächen aufweist, die mit der allgemeinen Ebene des Bandes einen Winkel zwischen 35° und 55° bilden.

15. Verfahren nach einem der vorhergehenden Ansprüche, **dadurch gekennzeichnet, dass** die Textur Muster des Typs Prismen, Kegel oder Pyramiden mit polygonaler Basis aufweist.

**Claims**

1. A process for manufacturing a flat glass having a surface texture by floating a ribbon of said glass on a molten metal (32) in a float chamber, the glass being poured on the molten metal upstream of the chamber onto the molten metal, the ribbon of glass being extracted downstream of the chamber, said chamber including an imprinting roll (30) applying a texture to the top surface of the glass, **characterized in that** the imprinting roll (30) is metallic and is cooled by water circulating through it and **in that** the glass ribbon (31) is cooled downstream of the imprinting roll in such a way that a temperature difference of at least 150°C is obtained on the glass surface between a point located on the surface of the glass 50 cm before contact with the roll and a point located on the surface of the glass 50 cm after contact with the roll, the cooling of the glass ribbon downstream of the imprinting roll being exerted by a barrier (36) submerged in the bath of molten metal and placed substantially below the imprinting roll so as to separate an upstream bath of hotter molten metal from a downstream bath of cooler molten metal.

2. The process as claimed in the preceding claim, **characterized in that** a temperature difference of at least 200°C is obtained on the surface of the glass between a point located on the surface of the glass 50 cm before contact with the roll and a point located on the surface of the glass 50 cm after contact with the roll (30).

3. The process as claimed in one of the preceding claims, **characterized in that** the cooling of the ribbon of glass downstream of the imprinting roll is exerted by an atmosphere that is cooler downstream of the imprinting roll than upstream thereof or by a heat absorber placed downstream of the imprinting roll (30).

4. The process as claimed in one of the preceding claims, **characterized in that** a pipe through which a coolant flows is placed above the glass ribbon downstream of the imprinting roll (30).

5. The process as claimed in one of the preceding claims, **characterized in that** a gas is blown onto the glass ribbon downstream of the imprinting roll, the temperature of said gas being lower than that of the glass at the blowing point.

6. The process as claimed in one of the preceding claims, **characterized in that** a screen (33) is placed above the glass ribbon downstream of the imprinting roll.

7. The process as claimed in one of the preceding claims, **characterized in that** an additional, untextured, cooled roll is placed downstream of the imprinting roll above the glass ribbon and touches the surface of the glass in order to cool it without creating additional marking.

8. The process as claimed in one of claims 1 to 6, **characterized in that** an additional, textured, cooled roll is placed downstream of the imprinting roll above the glass ribbon and touches the surface of the glass in order to cool it, while creating additional masking.

9. The process as claimed in either of the two preceding claims, **characterized in that** the additional roll is cooled by water flowing through it.

10. The process as claimed in one of the preceding claims, **characterized in that** a partition (35) is placed substantially above the imprinting roll so as to separate a hotter upstream atmosphere from a cooler downstream atmosphere.

11. The process as claimed in one of the preceding claims, **characterized in that** the glass is at a temperature between 750 and 980°C when 50 cm upstream of the transverse line of contact of the roll with the glass.

12. The process as claimed in the preceding claim, **characterized in that** the glass is at a temperature between 810 and 870°C when 50 cm upstream of the transverse line of contact of the roll with the glass.

13. The process as claimed in one of the preceding claims, **characterized in that** the glass has an energy transmission greater than 85% for a glass thickness of 3.2 mm.

14. The process as claimed in one of the preceding claims , **characterized in that** the texture comprises geometrical features comprising inclined surfaces making an angle between 35° and 55° with the general plane of the ribbon.

15. The process as claimed in one of the preceding claims , **characterized in that** the texture comprises features of the cone or pyramid or prism type.

Fig 1

a)

b)

Fig 2

Fig 3

Fig 4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 03046617 A
- WO 2005111670 A
- WO 2006134301 A
- WO 2006134300 A
- WO 2007015019 A
- WO 2008144655 A
- US 4746347 A